(19) Europäisches Patentamt
European Patent Office
Office européen des brevets

(11) EP 1 141 107 B1

(12) **EUROPÄISCHE PATENTSCHRIFT**

(45) Veröffentlichungstag und Bekanntmachung des Hinweises auf die Patenterteilung:
**12.10.2005 Patentblatt 2005/41**

(21) Anmeldenummer: **99959330.4**

(22) Anmeldetag: **25.11.1999**

(51) Int Cl.$^7$: **C08K 3/34**, C08L 69/00

(86) Internationale Anmeldenummer:
**PCT/EP1999/009100**

(87) Internationale Veröffentlichungsnummer:
**WO 2000/034371 (15.06.2000 Gazette 2000/24)**

(54) **POLYCARBONAT-FORMMASSEN MIT VERBESSERTEN MECHANISCHEN EIGENSCHAFTEN**

POLYCARBONATE MOLDING MATERIALS EXHIBITING IMPROVED MECHANICAL PROPERTIES

MATIERES A MOULER A BASE DE POLYCARBONATES PRESENTANT DES CARACTERISTIQUES MECANIQUES AMELIOREES

(84) Benannte Vertragsstaaten:
**AT BE CH CY DE DK ES FI FR GB GR IE IT LI LU MC NL PT SE**

(30) Priorität: **08.12.1998 DE 19856484**

(43) Veröffentlichungstag der Anmeldung:
**10.10.2001 Patentblatt 2001/41**

(73) Patentinhaber: **Bayer MaterialScience AG**
**51368 Leverkusen (DE)**

(72) Erfinder:
- **ZOBEL, Michael**
  **D-40547 Düsseldorf (DE)**
- **ECKEL, Thomas**
  **D-41540 Dormagen (DE)**
- **WITTMANN, Dieter**
  **D-51375 Leverkusen (DE)**
- **KELLER, Bernd**
  **D-47608 Geldern (DE)**

(56) Entgegenhaltungen:
**EP-A- 0 066 772** **EP-A- 0 755 977**

- **DATABASE WPI Section Ch, Week 199807 Derwent Publications Ltd., London, GB; Class A13, AN 1998-071966 XP002132320 -& JP 09 310011 A (NIPPON GE PLASTICS KK), 2. Dezember 1997 (1997-12-02)**
- **DATABASE WPI Section Ch, Week 199741 Derwent Publications Ltd., London, GB; Class A17, AN 1997-448658 XP002132321 -& WO 97 31980 A (KANEKA CORP), 4. September 1997 (1997-09-04)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft Polycarbonat-Formmassen, enthaltend Silicium-Verbindungen, die eine erhöhte Wärmeformbeständigkeit, verbessertes ESC-Verhalten sowie eine verbesserte Reißdehnung aufweisen.

Thermoplastische Formmassen insbesondere solche, die Homo-und/oder Copolymerisate von einem oder mehreren ethylenisch ungesättigten Monomeren, Polycarbonate sowie Polyester enthalten, sind aus einer Vielzahl Veröffentlichungen bekannt. Dies gilt insbesondere für den Einsatz von ABS-Polymerisaten. Nur beispielhaft sei auf folgende Dokumente hingewiesen: DE-A-19616968, WO 97/40092, EP-A-728811, EP-A-315868 (= US-A-4937285), EP-A 0174493 (US-P 4983658), US-P 5030675, JA 59202240, EP-A 0363608 (= US-P 5204394), EP-A 0767204, EP-A 0611798, WO 96/27600, EP-A 0754531.

EP-A 761 746 beschreibt Formmassen auf Basis von Polycarbonat und gegebenenfalls anderen Thermoplasten, die feinstteilige anorganische Pulver und Flammschutzmittel enthalten. Silicium und Siliciumdioxid sind neben einer Vielzahl von aufgezählten feinstteiligen anorganischen Verbindungen ebenfalls erwähnt.

Die in diesem Stand der Technik beschriebenen thermoplastischen Formmassen sind in ihren mechanischen Eigenschaften noch verbesserungsbedürftig. Dies gilt insbesondere für die Anwendung dieser Formmassen in sicherheitsrelevanten Teilen z.B. in der Kfz-Industrie, wo hohe Anforderungen an die Reißdehnung, das ESC-Verhalten und die Wärmeformbeständigkeit gestellt werden.

Überraschenderweise wurde nun gefunden, daß Polycarbonat Formmassen ein verbessertes ESC-Verhalten, eine bessere Reißdehnung und eine erhöhte Wärmeformbeständigkeit aufweisen, wenn ihnen Silicium-Verbindungen bestimmter Größe zugesetzt werden.

Gegenstand der Erfindung sind thermoplastische Formmassen enthaltend

A. 40 bis 99 Gew.-Teile eines aromatischen Polycarbonats,

B. 0 bis 50 Gew.-Teile eines Vinylcopolymerisats,

C. 0,5 bis 60 Gew.-Teile eines Pfropfpolymerisats mit einem Gelgehalt über 60 Gew.-% und einem mittleren Teilchendurchmesser von 0,1-0,6 µm,

D. 0,1 bis 30 Gew.-Teile einer Siliciumverbindung ausgewählt aus Siliciumoxiden, Siliciumhydroxiden, wasserhaltigen Silicumoxiden, Silicate und Siliciden mit einem mittleren Teilchendurchmesser von 3 bis 50 nm.

Die erfindungsgemäßen Formmassen können als Zusatzstoffe(Komponente E) weiterhin enthalten: übliche Flammschutzmittel, feinstteilige anorganische Verbindungen oder fluorierte Polyolefine als Anti-Dripping Mittel sowie eine Mischung davon. Die Flammschutzmittel und feinstteiligen anorganischen Verbindungen werden im allgemeinen jeweils in einer Menge von 0,1 bis 25, vorzugsweise 2 bis 15 Gew.-Teilen verwendet. Die fluorierten Polyolefine werden im allgemeinen in einer Menge von 0,01 bis 5, vorzugsweise 0,25 bis 2 Gew.-Teilen eingesetzt.

Die Summe aller Gewichtsanteile A + B + C + D ergibt 100.

### Komponente A

Erfindungsgemäß geeignete, thermoplastische, aromatische Polycarbonate gemäß Komponente A sind solche auf Basis der Diphenole der Formel (I)

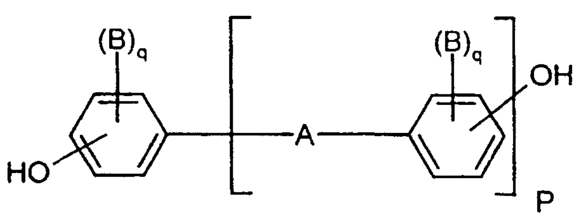

(I)

worin

A eine Einfachbindung $C_1$-$C_5$-Alkylen, $C_2$-$C_5$-Alkyliden, $C_5$-$C_6$-Cycloalkyliden, -S- oder -$SO_2$-,

B Chlor, Brom,

q 0, 1 oder 2 und

p 1 oder 0 sind,

oder alkylsubstituierte Dihydroxyphenylcycloalkane der Formel (II),

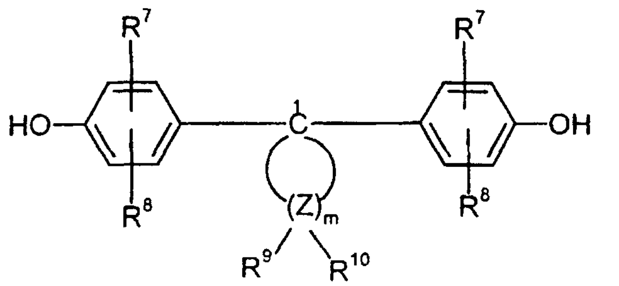

(II)

worin

$R^7$ und $R^8$ unabhängig voneinander, jeweils Wasserstoff, Halogen, bevorzugt Chlor oder Brom, $C_1$-$C_8$-Alkyl, $C_5$-$C_6$-Cycloalkyl, $C_6$-$C_{10}$-Aryl, bevorzugt Phenyl, und $C_7$-$C_{12}$-Aralkyl, bevorzugt Phenyl-$C_1$-$C_4$-Alkyl, insbesondere Benzyl,

m eine ganze Zahl von 4, 5, 6 oder 7, bevorzugt 4 oder 5,

$R^9$ und $R^{10}$ für jedes Z individuell wählbar, unabhängig voneinander Wasserstoff oder $C_1$-$C_6$-Alkyl,

und

Z Kohlenstoff bedeutet, mit der Maßgabe, daß an mindestens einem Atom Z $R^9$ und $R^{10}$ gleichzeitig Alkyl bedeuten.

Geeignete Diphenole der Formel (I) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, 2,2-Bis-(3-chlor-4-hydroxy-phenyl)-propan, 2,2-Bis-(3,5-dibrom-4-hydroxyphenyl)-propan.

Bevorzugte Diphenole der Formel (I) sind 2,2-Bis-(4-hydroxyphenyl)-propan, 2,2-Bis-(3,5-dichlor-4-hydroxyphenyl)-propan und 1,1-Bis-(4-hydroxyphenyl)-cyclohexan.

Bevorzugte Diphenole der Formel (II) sind 1,1-Bis-(4-hydroxyphenyl)-3,3-dimethylcyclohexan, 1,1-Bis-(4-hydroxyphenyl)-3,3,5-trimethylcyclohexan und 1,1-Bis-(4-hydroxyphenyl)-2,4,4-trimethyl-cyclopentan.

Erfindungsgemäß geeignete Polycarbonate sind sowohl Homopolycarbonate als auch Copolycarbonate.

Komponente A kann auch eine Mischung der vorstehend definierten thermoplastischen Polycarbonate sein.

Polycarbonate können in bekannter Weise aus Diphenolen mit Phosgen nach den Phasengrenzflächenverfahren oder mit Phosgen nach dem Verfahren in homogener Phase, dem sogenannten Pyridinverfahren, hergestellt werden, wobei das Molekulargewicht in bekannter Weise durch eine entsprechende Menge an bekannten Kettenabbrechern eingestellt werden kann.

Geeignete Kettenabbrecher sind z.B. Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-OS 2842005 oder Monoalkylphenol bzw. Dialkylphenol mit insgesamt 8 bis 20 C-Atomen in den Alkylsubstituenten gemäß deutscher Patentanmeldung P 3506472.2 wie 3,5-di-tert.-Butylphenol, p-iso-Octylphenol, p-tert.-Octylphenol, p-Dodecylphenol und 2-(3,5-Dimethyl-heptyl)-phenol und 4-(3,5-Dimethyl-heptyl)-phenol.

Die Menge an Kettenabbrechern beträgt im allgemeinen zwischen 0,5 und 10 Mol-%, bezogen auf die Summe der jeweils eingesetzten Diphenole der Formeln (I) und/oder (II).

Die erfindungsgemäß geeigneten Polycarbonate A haben mittlere Molekulargewichte ($\overline{M}_w$), Gewichtsmittel, gemessen z.B. durch Ultrazentrifugation oder Streulichtmessung) von 10000 bis 200000, vorzugsweise 20000 bis 80000.

Die erfindungsgemäß geeigneten Polycarbonate A können in bekannter Weise verzweigt sein, und zwar vorzugsweise durch den Einbau von 0.05 bis 2 Mol-%, bezogen auf die Summe der eingesetzten Diphenole, an tri- oder mehr als trifunktionellen Verbindungen, z.B. solchen mit drei oder mehr als drei phenolischen Gruppen.

Bevorzugte Polycarbonate sind neben dem Bisphenol-A-Homopolycarbonat die Copolycarbonate von Bisphenol A mit bis zu 15 Mol-%, bezogen auf die Molsummen an Diphenolen, an 2,2-Bis-(3,5-dibrom-4-hydroxyphenyl)-propan und die Copolycarbonate von Bisphenol A mit bis zu 60 Mol-%, bezogen auf die Mol-Summen an Diphenolen, 1,1-Bis-(4-hydroxyphenyl)-3,3,5-trimethylcyclohexan.

Die Polycarbonate A können teilweise oder vollständig durch aromatische Polyestercarbonate ersetzt werden. Die aromatischen Polycarbonate der Komponente A können auch Polysiloxan-Blöcke enthalten. Deren Herstellung wird beispielsweise in der DE-OS 3334872 und in der US-PS 3821325 beschrieben.

**Komponente B**

Erfindungsgemäß einsetzbare Vinyl-(Co)polymerisate gemäß Komponente B sind solche aus wenigstens einem Monomeren aus der Reihe: Styrol, α-Methylstyrol und/oder kemsubstituierten Styrolen, $C_1$-$C_8$-Alkylmethacrylat, $C_1$-$C_8$-Alkylacrylat (B.1) mit wenigstens einem Monomeren aus der Reihe: Acrylnitril, Methacrylnitril, $C_1$-$C_8$-Alkylmethacrylat, $C_1$-$C_8$-Alkylacrylat, Maleinsäureanhydrid und/oder N-substituierte Maleinimide (B.2).

$C_1$-$C_8$-Alkylacrylate bzw. $C_1$-$C_8$-Alkylmethacrylate sind Ester der Acrylsäure bzw. Methacrylsäure und einwertiger Alkohole mit 1 bis 8 C-Atomen. Besonders bevorzugt sind Methacrylsäuremethylester, -ethylester und -propylester. Als besonders bevorzugter Methacrylsäureester wird Methylmethacrylat genannt.

Thermoplastische (Co)polymerisate mit einer Zusammensetzung gemäß Komponente B können bei der Pfropfpolymerisation zur Herstellung der Komponente C als Nebenprodukt entstehen, besonders dann, wenn große Mengen Monomere auf kleine Mengen Kautschuk gepfropft werden. Die erfindungsgemäß einzusetzende Menge an (Co)polymerisat B bezieht diese Nebenprodukte der Pfropfpolymerisation nicht mit ein.

Die (Co)polymerisate gemäß Komponente B sind harzartig, thermoplastisch und kautschukfrei.

Die thermoplastischen (Co)polymerisate B enthalten 50 bis 99, vorzugsweise 60 bis 95 Gew.-Teile B. 1 und 50 bis 2, vorzugsweise 40 bis 5 Gew.-Teile B.2.

Besonders bevorzugte (Co)polymerisate B sind solche aus Styrol mit Acrylnitril und gegebenenfalls mit Methylmethacrylat, aus α-Methylstyrol mit Acrylnitril und gegebenenfalls mit Methylmethacrylat, oder aus Styrol und α-Methylstyrol mit Acrylnitril und gegebenenfalls mit Methmethacrylat.

Die Styrol-Acrylnitril-Copolymerisate gemäß Komponente B sind bekannt und lassen sich durch radikalische Polymerisation, insbesondere durch Emulsions-, Suspensions-, Lösungs- oder Massepolymerisation herstellen. Die Copolymerisate gemäß Komponente B besitzen vorzugsweise Molekulargewichte $\overline{M}_w$ (Gewichtsmittel, ermittelt durch Lichtstreuung oder Sedimentation) zwischen 15000 und 200000.

Besonders bevorzugte erfindungsgemäße Copolymerisate B sind auch statistisch aufgebaute Copolymerisate aus Styrol und Maleinsäureanhydrid, die durch eine kontinuierliche Masse oder Lösungspolymerisation bei unvollständigen Umsätzen aus dem entsprechenden Monomeren hergestellt werden können.

Die Anteile der beiden Komponenten der erfindungsgemäß geeigneten statistisch aufgebauten Styrol-Maleinsäureanhydrid-Copolymeren können innerhalb weiter Grenzen variiert werden. Der bevorzugte Gehalt an Maleinsäureanhydrid liegt bei 5 bis 25 Gew.-%.

Die Molekulargewichte (Zahlenmittel $\overline{M}_n$) der erfindungsgemäß geeigneten statistisch aufgebauten Styrol-Maleinsäureanhydrid-Copolymeren gemäß Komponente B können über einen weiten Bereich variieren. Bevorzugt ist der Bereich von 60000 bis 200000. Bevorzugt ist für diese Produkte eine Grenzviskosität von 0.3 bis 0.9 (gemessen in Dimethylformamid bei 25°C; siehe hierzu Hoffmann, Krömer, Kuhn, Polymeranalytik I, Stuttgart 1977, Seite 316 ff.).

Anstelle von Styrol können die Vinyl(Co)polymerisate B auch kemsubstituierte Styrole wie p-Methylstyrol, Vinyltoluol, 2,4-Dimethylstyrol und andere substituierte Styrole wie α-Methylstyrol, die gegebenenfalls auch halogeniert (vorzugsweise mit Chlor und/oder Brom) sein können, enthalten.

**Komponente C**

Die Pfropfpolymerisate C umfassen z.B. Pfropfcopolymerisate mit kautschukelastischen Eigenschaften, die im wesentlichen aus mindestens zwei der folgenden Monomeren erhältlich sind: Chloropren, Butadien-1,3, Isopropen, Styrol. Acrylnitril, Ethylen, Propylen, Vinylacetat und (Meth)-Acrylsäureester mit 1 bis 18 C-Atomen in der Alkoholkomponente; also Polymerisate, wie sie z.B. in "Methoden der Organischen Chemie" (Houben-Weyl), Bd. 14/1, Georg Thieme-Verlag, Stuttgart 1961, S. 393-406 und in C.B. Bucknall, "Thoughened Plastics", Appl. Science Publishers, London 1977, beschrieben sind. Die Polymerisate C sind partiell vernetzt und besitzen Gelgehalte von über 60 Gew.-%.

Bevorzugte Pfropfpolymerisate C umfassen Pfropfpolymerisate aus:

C. 1 5 bis 95, vorzugsweise 30 bis 80 Gew.-Teile, einer Mischung aus

C.1.1 50 bis 95 Gew.-Teilen Styrol, α-Methylstyrol, mit Halogen oder Methyl kernsubstituiertem Styrol, $C_1$-$C_8$-Al-

kylmethacrylat, insbesondere Methylmethacrylat, $C_1$-$C_8$-Alkylacrylat, insbesondere Methylmethacrylat oder Mischungen dieser Verbindungen und

C.1.2 5 bis 50 Gew.-Teilen Acrylnitril, Methacrylnitril, $C_1$-$C_8$-Alkylmethacrylaten, insbesondere Methylmethacrylat, $C_1$-$C_8$-Alkylacrylat, insbesondere Methacrylat, Maleinsäureanhydrid, $C_1$-$C_4$-alkyl-bzw. phenyl-N-substituierte Maleinimide oder Mischungen dieser Verbindungen auf

C.2 5 bis 95, vorzugsweise 20 bis 70 Gew.-Teilen Polymerisat mit einer Glasübergangstemperatur unter -10°C.

Bevorzugte Pfropfpolymerisate C sind z.B. mit Styrol und/oder Acrylnitril und/oder (Meth)-Acrylsäurealkylestern gepfropfte Polybutadiene, Butadien/Styrol-Copolymerisate und Acrylatkautschuke; d.h. Copolymerisate der in der DE-OS 1694173 (=US-PS 3564077) beschriebenen Art; mit Acryl- oder Methacrylsäurealkylestern, Vinylacetat, Acrylnitril, Styrol und/oder Alkylstyrolen gepfropfte Polybutadiene, Butadien/Styrol oder Butadien/Acrylnitril-Copolymerisate, Polyisobutene oder Polyisoprene, wie sie z.B. in der DE-OS 2348377 (=US-PS 3919353) beschrieben sind.
Besonders bevorzugte Polymerisate C sind z.B. ABS-Polymerisate, wie sie z.B. in der DE-OS 2035390 (=US-PS 3644574) oder in der DE-OS 2248242 (=GB-PS 1409275) beschrieben sind.
Besonders bevorzugte Pfropfpolymerisate C sind Pfropfpolymerisate, die durch Pfropfreaktion von

I. 10 bis 70, vorzugsweise 15 bis 50, insbesondere 20 bis 40 Gew.-%, bezogen auf Pfropfprodukt, mindestens eines (Meth)-Acrylsäureesters oder 10 bis 70, vorzugsweise 15 bis 50, insbesondere 20 bis 40 Gew.-% eines Gemisches aus 10 bis 50, vorzugsweise 20 bis 35 Gew.-%, bezogen auf Gemisch, Acrylnitril oder (Meth)-Acrylsäureester und 50 bis 90, vorzugsweise 65 bis 80 Gew.-%, bezogen auf Gemisch, Styrol auf

II. 30 bis 90, vorzugsweise 50 bis 85, insbesondere 60 bis 80 Gew.-%, bezogen auf Pfropfprodukt, eines Butadien-Polymerisats mit mindestens 50 Gew.-%, bezogen auf II, Butadienresten als Pfropfgrundlage

erhältlich sind.
Der Gelanteil der Pfropfgrundlage 11 beträgt vorzugsweise mindestens 20 Gew.-%, besonders bevorzugt mindestens 40 Gew.-% (in Toluol gemessen), der Pfropfgrad G 0,15 bis 0,55 und der mittlere Teilchendurchmesser $d_{50}$ des Pfropfpolymerisats 0,1 bis 0,6 μm.
(Meth)-Acrylsäureester 1 sind Ester der Acrylsäure oder Methacrylsäure und einwertiger Alkoholen mit 1 bis 18 C-Atomen. Besonders bevorzugt sind Methacrylsäuremethylester, -ethylester und -propylester.
Die Pfropfgrundlage II kann neben Butadienresten bis zu 50 Gew.-%, bezogen auf II, Reste anderer ethylenisch ungesättigter Monomeren, wie Styrol, Acrylnitril, Ester der Acryl- oder Methacrylsäure mit 1 bis 4 C-Atomen in der Alkoholkomponente (wie Methylacrylat, Ethylacrylat, Methylmethacrylat, Ethylmethacrylat), Vinylester und/oder Vinylether enthalten. Die bevorzugte Pfropfgrundlage II besteht aus reinem Polybutadien.
Der Pfropfgrad G bezeichnet das Gewichtsverhältnis von aufgepfropften Pfropfmonomeren zur Pfropfgrundlage und ist dimensionslos.
Die mittlere Teilchengröße $d_{50}$ ist der Durchmesser, oberhalb und unterhalb dessen jeweils 50 Gew.-% der Teilchen liegen. Er kann mittels Ultrazentrifugenmessung (W. Scholtan, H. Lange, Kolloid, Z. und Z. Polymere 250 (1972), 782-796) bestimmt werden.
Besonders bevorzugte Polymerisate C sind z.B. auch Pfropfpolymerisate aus

(a) 20 bis 90 Gew.-%, bezogen auf C, Acrylatkautschuk mit einer Glasübergangstemperatur unter -20°C als Pfropfgrundlage und

(b) 10 bis 80 Gew.-%, bezogen auf C, mindestens eines polymerisierbaren, ethylenisch ungesättigten Monomeren (vgl. C.l) als Pfropfmonomere.

Die Acrylatkautschuke (a) der Polymerisate C sind vorzugsweise Polymerisate aus Acrylsäurealkylestern, gegebenenfalls mit bis zu 40 Gew.-%, bezogen auf (a), anderer polymerisierbarer, ethylenisch ungesättigter Monomerer. Zu den bevorzugten polymerisierbaren Acrylsäureestern gehören $C_1$-$C_8$-Alkylester, beispielsweise Methyl-, Ethyl-, Butyl-, n-Octyl- und 2-Ethylhexylester; Halogenalkylester, vorzugsweise Halogen-$C_1$-$C_8$-alkylester, wie Chlorethylacrylat, sowie Mischungen dieser Monomeren.
Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische

Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugt vernetzende Monomere sind Allylmethacrylat, Ethylenglykoldimethylacrylat, Diallylphthalat und heterocyclische Verbindungen, die mindestens 3 ethylenisch ungesättigte Gruppen aufweisen.

Besonders bevorzugte vernetzende Monomere sind die cyclischen Monomeren Triallylcyanurat, Triallylisocyanurat, Trivinylcyanurat, Triacryloylhexahydro-s-triazin, Triallylbenzole.

Die Menge der vernetzenden Monomeren beträgt vorzugsweise 0.02 bis 5, insbesondere 0.05 bis 2 Gew.-%, bezogen auf die Pfropfgrundlage (a).

Bei cyclischen vernetzenden Monomeren mit mindestens 3 ethylenisch ungesättigten Gruppen ist es vorteilhaft, die Menge auf unter 1 Gew.-% der Pfropfgrundlage (a) zu beschränken.

Bevorzugte "andere" polymerisierbare, ethylenisch ungesättigte Monomere, die neben den Acrylsäureestern gegebenenfalls zur Herstellung der Pfropfgrundlage (a) dienen können, sind z.B. Acrylnitril, Styrol, $\alpha$-Methylstyrol, Acrylamide, Vinyl-$C_1$-$C_6$-alkylether, Methylmethacrylat, Butadien. Bevorzugte Acrylatkautschuke als Pfropfgrundlage (a) sind Emulsionspolymerisate, die einen Gelgehalt von mindestens 60 Gew.-% aufweisen.

Weitere geeignete Pfropfgrundlagen sind Silikonkautschuke mit pfropfaktiven Stellen, wie sie in Offenlegungsschriften DE-OS 3704657, DE-OS 3704655, DE-OS 3631540 und DE-OS 3631539 beschrieben werden.

Der Gelgehalt der Pfropfgrundlage (a) wird bei 25°C in Dimethylformamid bestimmt (M. Hoffmann, H. Krömer, R. Kuhn, Polymeranalytik I und II, Georg Thieme-Verlag, Stuttgart 1977).

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten C auch solche Produkte verstanden, die durch Polymerisation der Pfropfmonomeren in Gegenwart der Pfropfgrundlage gewonnen werden.

## Komponente D

Erfindungsgemäß einsetzbar sind Verbindungen des Siliciums ausgewählt aus Siliciumoxiden, Siliciumhydroxiden, wasserhaltigen Silicumoxiden, Silicate und Siliciden mit einem mittleren Teilchendurchmesser von 3 bis 50 nm.

Besonders bevorzugt sind Oxide des Siliciums.

Insbesondere bevorzugt sind Oxide des Siliciums mit hydrophilem Charakter.

Der Teilchendurchmesser beträgt von 3-50 nm, bevorzugt 5-15 nm.

Teilchengröße und Teilchendurchmesser bedeuten immer den mittleren Teilchendurchmesser $d_{50}$, ermittelt durch Ultrazentrifugenmessungen nach W. Scholtan et al. Kolloid-Z. und Z.Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Komponenten B oder C mit Dispersionen, Suspensionen, Pasten oder Solen der feinstteiligen anorganischen Materialien dar.

## Komponente E

Die erfindungsgemäßen Formmassen können im allgemeinen 0,1 bis 25, vorzugsweise 2 bis 15 Gew.-Teile Flammschutzmittel enthalten. Beispielhaft werden als Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze, anorganische Hydroxidverbindungen wie Mg- Al-hydroxid, anorganische Verbindungen wie Aluminiumoxide, Titandioxide, Antimonoxide, Barium-metaborat, Hydroxoantimonat, Zirkon-oxid, Zirkon-hydroxid, Molybden-oxid, Ammonium-molybdat, Zinn-borat, Ammonium-borat, Barium-metaborat und Zinnoxid sowie Siloxanverbindungen genannt.

Als Flammschutzverbindungen können ferner Phosphorverbindungen, wie sie in EP-A 363608, EP-A 345522 oder EP-A 640655 beschrieben sind, eingesetzt werden.

Solche Phosphorverbindungen sind beispielsweise Phosphorverbindungen der Formel (III)

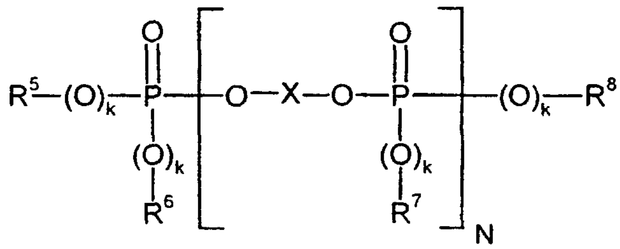

(III),

in welcher

$R^5$, $R^6$, $R^7$ und $R^8$, unabhängig voneinander jeweils gegebenenfalls halogeniertes $C_1$-$C_8$-Alkyl, jeweils gegebenenfalls durch Alkyl, vorzugsweise $C_1$-$C_4$-Alkyl, und/oder Halogen, vorzugsweise Chlor, Brom, substituiertes $C_5$-$C_6$-Cycloalkyl, $C_6$-$C_{30}$-Aryl oder $C_7$-$C_{12}$-Aralkyl bedeuten.

Bevorzugt stehen $R^5$, $R^6$, $R^7$ und $R^8$ unabhängig voneinander für $C_1$-$C_4$-Alkyl, Phenyl, Naphthyl oder Phenyl-$C_1$-$C_4$-alkyl. Die aromatischen Gruppen $R^5$, $R^6$, $R^7$ und $R^8$ können ihrerseits mit Halogen- und/oder Alkylgruppen, vorzugsweise Chlor, Brom und/oder $C_1$-$C_4$-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.

X in der Formel (III) bedeutet einen ein- oder mehrkemigen aromatischen Rest mit 6 bis 30 C-Atomen. Dieser leitet sich vorzugsweise von Diphenolen der Formel (I) ab. Besonders bevorzugt sind Diphenylphenol, Bisphenol A, Resorcin oder Hydrochinon oder deren chlorierte oder bromierte Derivate.

k in der Formel (III) kann, unabhängig voneinander, 0 oder 1 sein, vorzugsweise ist k gleich 1.

N steht für Werte von 0 bis 30, vorzugsweise für 0 bzw. einen durchschnittlichen Wert von 0.3 bis 20 , besonders bevorzugt 0.5 bis 10, insbesondere 0.5 bis 6.

Mischungen aus Phosphorverbindungen der Formel (III) enthalten vorzugsweise 10 bis 90 Gew.-%, vorzugsweise 12 bis 40 Gew.-%, wenigstens einer Monophosphorverbindung und wenigstens einer oligomeren Phosphorverbindung beziehungsweise eines Gemisches von oligomeren Phosphorverbindungen in Mengen von 10 bis 90 Gew.-%, vorzugsweise 60 bis 88 Gew.-%, bezogen auf die Gesamtmenge an Phosphorverbindungen.

Monophosphorverbindungen der Formel (III) sind insbesondere Tributylphosphat, Tris-(2-chlorethyl)-phosphat, Tris-(2,3-dibromprobyl)-phosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, halogensubstituierte Arylphosphate, Methylphosphonsäuredimethylester, Methylphosphensäurediphenylester, Phenylphosphonsäurediethylester, Triphenylphosphinoxid oder Trikresylphosphinoxid.

Die Mischungen aus Monomeren und oligomeren Phosphorverbindungen der Formel (III) weisen durchschnittliche N-Werte von 0.3 bis 20, bevorzugt 0.5 bis 10, insbesondere von 0.5 bis 6 auf.

Die Phosphorverbindungen gemäß Formel (III) sind bekannt (vgl. z.B. EP-A 363608, EP-A 640655, EP-A 542522) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Weitere Phosphorhaltige Verbindungen, die als Flammschutzmittel eingesetzt werden können, sind lineare Phosphazene gemäß Formel (IIIa) und cyclische Phosphazene gemäß Formel (IIIb)

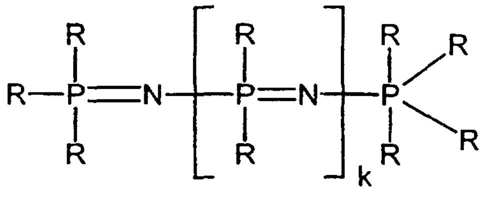

(IIIa),

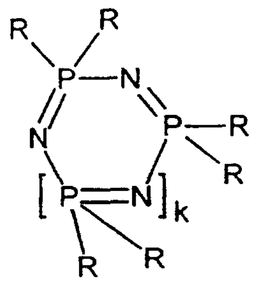

(IIIb),

wobei:

R jeweils gleich oder verschieden ist und für Amino, jeweils gegebenenfalls halogeniertes, vorzugsweise mit Fluor halogeniertes $C_1$- bis $C_8$-Alkyl, oder $C_1$- bis $C_8$- Alkoxy, jeweils gegebenenfalls durch Alkyl, vorzugsweise $C_1$-$C_4$-Alkyl, und/oder Halogen, vorzugsweise Chlor und/oder Brom, substituiertes $C_5$- bis $C_6$-Cycloalkyl, $C_6$- bis $C_{20}$-Aryl, vorzugsweise Phenyl oder Naphthyl, $C_6$- bis $C_{20}$-Aryloxy, vorzugsweise Phenoxy, Naphthyloxy, oder $C_7$- bis $C_{12}$-Aralkyl, vorzugsweise Phenyl-$C_1$-$C_4$-alkyl, steht,

k für 0 oder eine Zahl von 1 bis 15, vorzugsweise für eine Zahl von 1 bis 10 steht,

Beispielhaft seien genannt:

Propoxyphosphazen, Phenoxyphosphazen, Methylphenoxyphosphazen, Aminophosphazen und Fluoralkylphosphazene.

Bevorzugt ist Phenoxyphosphazen.

Die Phosphazene können allein oder als Mischung eingesetzt werden. Der Rest R kann immer gleich sein oder 2 oder mehr Reste in den Formeln (IIIa) und (IIIb) können verschieden sein.

Die Phosphazene und deren Herstellung sind beispielsweise in EP-A 728811, DE-A 1961668 und WO 97/40092 beschrieben.

Die erfindungsgemäßen Formmassen können gegebenenfalls von Verbindungen der Formeln (III), (IIIa) und (IIIb) verschiedene Flammschutzmittel in einer Menge bis zu 20 Gew.-Teilen enthalten. Bevorzugt sind synergistisch wirkende Flammschutzmittel. Beispielhaft werden als weitere Flammschutzmittel organische Halogenverbindungen wie Decabrombisphenylether, Tetrabrombisphenol, anorganische Halogenverbindungen wie Ammoniumbromid, Stickstoffverbindungen, wie Melamin, Melaminformaldehyd-Harze oder Siloxanverbindungen genannt. Die erfindungsgemäßen Formmassen können gegebenenfalls von den anorganischen Verbindungen D abweichende anorganische Substanzen enthalten wie beispielsweise anorganische Hydroxidverbindungen wie Mg-, Al-hydroxid, anorganische Verbindungen wie Aluminiumoxid, Antimonoxide, Bariummetaborat, Hydroxoantimonat, Zirkoniumoxid, Zirkonhydroxid, Molybdänoxid, Ammoniummolybdat, Zinkborat, Ammoniumborat, Bariummetaborat und Zinnoxid.

Bevorzugte Flammschutzmittel sind ausgewählt aus Phosphorverbindungen der Formeln (III), (IIIa) und (IIIb) oder Mischungen davon. Besonders bevorzugt sind Phosphorverbindungen der Formel (III). Ferner können die erfindungsgemäßen thermoplastischen Formmassen feinstteilige anorganische Verbindungen enthalten, die sich günstig auf die Flammschutzeigenschaften der erfindungsgemäßen Formmassen auswirken. Diese anorganischen Verbindungen umfassen Verbindungen eines oder mehrerer Metalle der 1. bis 5. Hauptgruppe oder der 1. bis 8. Nebengruppe des Periodensystems, bevorzugt der 2. bis 5. Hauptgruppe oder der 4. bis 8. Nebengruppe, besonders bevorzugt der 3. bis 5. Hauptgruppe oder der 4. bis 8. Nebengruppe mit den Elementen Sauerstoff, Schwefel, Bor, Phosphor, Kohlenstoff, Stickstoff, Wasserstoff und/oder Silicium, wobei die Siliciumverbindungen verschieden von denen gemäß Komponente D) sind.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugte feinstteilige anorganischen Verbindungen sind beispielsweise TiN, $TiO_2$, $SnO_2$,WC, ZnO, $Al_2O_3$, AlO(OH), $ZrO_2$, $Sb_2O_3$, Eisenoxide, $NaSO_4$, $BaSO_4$, Vanadiumoxide, Zinkborat, Silicate wie Al-Silikate, Mg-Silikate, ein, zwei, dreidimensionale Silikate, Mischungen und dotierte Verbindungen sind ebenfalls verwendbar. Desweiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Die durchschnittlichen Teilchendurchmesser sind kleiner gleich 200 nm, bevorzugt kleiner gleich 150 nm, insbesondere 1 bis 100 nm.

Teilchengröße und Teilchendurchmesser bedeutet immer den mittleren Teilchendurchmesser $d_{50}$, ermittelt

durch Ultrazentrifugenmessungen nach W. Scholtan et al. Kolloid-Z. und Z. Polymere 250 (1972), S. 782 bis 796.

Die anorganischen Verbindungen können als Pulver, Pasten, Sole, Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Kunststoffe eingearbeitet werden, beispielsweise durch direktes Kneten oder Extrudieren der Bestandteile der Formmasse und den feinstteiligen anorganischen Pulvern. Bevorzugte Verfahren stellen die Herstellung eines Masterbatch, z.B. in Flammschutzadditiven, anderen Additiven, Monomeren, Lösungsmitteln, in Komponente A oder die Cofällung von Dispersionen der Komponenten B oder C mit Dispersionen, Suspensionen, Pasten oder Solen der feinstteiligen anorganischen Materialien dar.

Weiterhin können fluorierte Polyolefine zugesetzt werden. Die fluorierten Polyolefine sind hochmolekular und besitzen Glasübergangstemperaturen von über -30°C, in der Regel von über 100°C, Fluorgehalte, vorzugsweise von 65 bis 76, insbesondere von 70 bis 76 Gew.-%, mittlere Teilchendurchmesser $d_{50}$ von 0.05 bis 1.000, vorzugsweise 0,08 bis 20 µm. Im allgemeinen haben die fluorierten Polyolefine eine Dichte von 1.2 bis 2.3 g/cm$^3$.

Bevorzugte fluorierte Polyolefine sind Polytetrafluorethylen, Polyvinylidenfluorid, Tetrafluorethylen/Hexafluorpropylen- und Ethylen/Tetrafluorethylen-Copolymerisate.

Die fluorierten Polyolefine sind bekannt (vgl. "Vinyl and Related Polymers" von Schildknecht, John Wiley & Sons, Inc., New York, 1962, Seite 484 bis 494; "Fluorpolymers" von Wall, Wiley-Interscience, John Wiley & Sons, Inc., New York, Band 13, 1970, Seite 623 bis 654; "Modern Plastics Encyclopedia", 1970 bis 1971, Band 47, Nr. 10A, Oktober 1970, Mc Grow-Hill, Inc., New York, Seite 134 und 774; "Modern Plastics Encyclopedia", 1975 bis 1976, Oktober 1975, Band 52, Nr. 10A, Mc Graw-Hill, Inc., New York, Seite 27, 28 und 472 und US-PS 3671487, 3723373 und 338092).

Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxydisulfat bei Drucken von 7 bis 71 kg/cm$^2$ und bei Temperaturen von 0 bis 200°C, vorzugsweise bei Temperaturen von 20 bis 100°C. (Nähere Einzelheiten siehe z.B. US-Patent 2393967). Je nach Einsatzform kann die Dichte dieser Materialien zwischen 1.2 und 2.3 g/cm$^3$, die mittlere Teilchengröße zwischen 0.05 und 1.000 nm liegen.

Erfindungsgemäß bevorzugte fluorierte Polyolefine sind Tetrafluorethylenpolymerisate und haben mittlere Teilchendurchmesser von 0.05 bis 20 µm, vorzugsweise 0,08 bis 10 µm, und eine Dichte von 1.2 bis 1.9 g/cm$^3$. Sie werden vorzugsweise in Form einer koagulierten Mischung von Emulsionen der Tetrafluorethylenpolymerisate mit Emulsionen der Pfropfpolymerisate C eingesetzt.

Geeignete, in Pulverform einsetzbare fluorierte Polyolefine sind Tetrafluorethylenpolymerisate mit mittleren Teilchendurchmessern von 100 bis 1.000 µm und Dichten von 2.0 g/cm$^3$ bis 2.3 g/cm$^3$.

Zur Herstellung einer koagulierten Mischung aus Komponente C und dem fluorierten Polyolefin wird zuerst eine wäßrige Emulsion (Latex) eines Pfropfpolymerisates C mit mittleren Latexteilchendurchmessern von 0.05 bis 2 µm, insbesondere 0.1 bis 0.6 µm, mit einer feinteiligen Emulsion eines fluorierten Polyolefins in Wasser mit mittleren Teilchendurchmessern von 0.05 bis 20 µm, insbesondere von 0.08 bis 10 µm, vermischt; geeignete Tetrafluorethylenpolymerisat-Emulsionen besitzen üblicherweise Feststoffgehalte von 30 bis 70 Gew.-%, insbesondere von 50 bis 60 Gew.-%.

Die wäßrige Emulsion des Pfropfpolymerisats C besitzt Feststoffgehalte von 25 bis 60 Gew.-%, vorzugsweise von 30 bis 45 Gew.-%, insbesondere von 30 bis 35 Gew.-%.

Die Mengenangabe bei der Beschreibung der Komponente C schließt den Anteil des Pfropfpolymerisats in der koagulierten Mischung aus Pfropfpolymerisat und fluorierten Polyolefinen nicht mit ein.

In der Emulsionsmischung liegt das Gewichtsverhältnis Pfropfpolymerisat C zum fluorierten Polyolefins bei 95:5 bis 60:40. Die Emulsionsmischung wird in bekannter Weise koaguliert, beispielsweise durch Sprühtrocknen, Gefriertrocknung oder Koagulation mittels Zusatz von anorganischen oder organischen Salzen, Säuren, Basen oder organischen, mit Wasser mischbaren Lösemitteln, wie Alkoholen, Ketonen, vorzugsweise bei Temperaturen von 20 bis 150°C, insbesondere von 50 bis 100°C. Falls erforderlich, kann bei 50 bis 200°C, bevorzugt 70 bis 100°C, getrocknet werden.

Geeignete Tetrafluorethylenpolymerisat-Emulsionen sind handelsübliche Produkte und werden beispielsweise von der Firma DuPont als Teflon® 30 N angeboten.

Die erfindungsgemäßen Formmassen können weiterhin übliche Additive, wie Anti-Dripping-Mittel (verschieden von E) Gleit- und Entformungsmittel, Nukleierungsmittel, Antistatika, Stabilisatoren, Füll- und Verstärkungsstoffe sowie Farbstoffe und Pigmente enthalten.

Als Füll- und Verstärkungsmaterialien sind beispielsweise Glasfasern, gegebenenfalls geschnitten oder gemahlen, Glasperlen, Glaskugeln, blättchenförmiges Verstärkungsmaterial, wie Kaolin, Talk, Glimmer, Silicate, Quarz, Talkum, Titandioxid, Wollastonit, Mika, Kohlefasern oder deren Mischung geeignet. Vorzugsweise werden als Verstärkungsmaterial geschnittene oder gemahlene Glasfasern eingesetzt. Bevorzugte Füllstoffe, die auch verstärkend wirken können sind Glaskugeln, Glimmer, Silikate, Quarz, Talkum, Titandioxid, Wollastonit.

Die gefüllten bzw. verstärkten Formmassen können bis zu 60, vorzugsweise 10 bis 40 Gew.-%, bezogen auf

die gefüllte bzw. verstärkte Formmasse, Füll- und/oder Verstärkungsstoffe enthalten.

Die erfindungsgemäßen Formmassen, enthaltend Komponenten A bis E und gegebenenfalls weitere Additive, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert oder schmelzextrudiert, wobei die fluorierten Polyolefine vorzugsweise in Form der bereits erwähnten koagulierten Mischung eingesetzt werden.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die Formmassen der vorliegenden Erfindung können zur Herstellung von Formkörpern jeder Art verwendet werden. Insbesondere können Formkörpern durch Spritzguß hergestellt werden. Beispiele für herstellbare Formkörper sind: Gehäuseteile jeder Art, z.B. für Haushaltsgeräte, wie Saftpressen, Kaffeemaschinen, Mixer, für Büromaschinen, wie Computer, Drucker, Monitore oder Abdeckplatten für den Bausektor und Teile für den Kfz-Sektor. Sie werden außerdem auf dem Gebiet der Elektrotechnik eingesetzt, weil sie sehr gute elektrische Eigenschaften haben.

Besonders geeignet sind die Formmassen zur Herstellung von dünnwandigen Formteilen (z.B. Datentechnik-Gehäuseteile), wo besonders hohe Ansprüche an Kerbschlagzähigkeit und Spannungsrißbeständigkeit der eingesetzten Kunststoffe gestellt werden.

Eine weitere Form der Verarbeitung ist die Herstellung von Formkörpern durch Blasformen oder durch Tiefziehen aus vorher hergestellten Platten oder Folien.

## Beispiele

### Komponente A

Polycarbonat auf Basis Bisphenol A mit einer relativen Lösungsviskosität 1.252 gemessen in Methylenchlorid bei 25°C und in einer Konzentration von 0.5 g/100 ml.

### Komponente B

Styrol/Acrylnitril-Copolymerisat mit einem Styrol/Acrylnitril-Verhältnis von 72:28 und einer Grenzviskosität von 0.55 dl/g (Messung in Dimethylformamid bei 20°C).

### Komponente C

Pfropfpolymerisat von 40 Gew.-Teilen Styrol und Acrylnitril im Verhältnis von 73:27 auf 60 Gew.-Teile teilchenförmigen vernetzten Polybutadienkautschuk (mittlerer Teilchendurchmesser $d_{50}$ = 0.3 µm), hergestellt durch Emulsionspolymerisation.

### Komponente D

Als feinstteilige anorganische Verbindung wird Siliciumdioxid eingesetzt, welches z.B. in Form von Aerosil 300 (D.1, hydrophil) oder Aerosil R812 (D.2, hydrophob) geschehen kann. Die mittlere Teilchengröße des Materials beträgt ca. 7 nm.

### Komponente E

Als Flammschutzmittel wird Komponente E.1 eingesetzt:

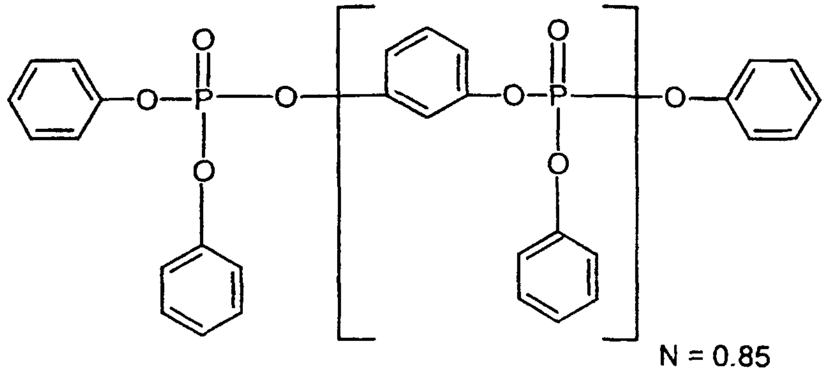

N = 0.85

Tetrafluorethylenpolymerisat (Komponente E.2) wird als koagulierte Mischung aus einer SAN-Pfropfpolymerisat-Emulsion gemäß Komponente C in Wasser und einer Tetrafluorethylenpolymerisat-Emulsion in Wasser eingesetzt. Das Gewichtsverhältnis Pfropfpolymerisat C zum Tetrafluorethylenpolymerisat E.2 in der Mischung ist 90 Gew.-% zu 10 Gew.-%. Die Tetrafluorethylenpolymerisat-Emulsion besitzt einen Feststoffgehalt von 60 Gew.-%, der mittlere Teilchendurchmesser liegt zwischen 0.05 und 0.5 µm. Die SAN-Pfropfpolymerisat-Emulsion besitzt einen Feststoffgehalt von 34 Gew.-% und einen mittleren Latexteilchendurchmesser von 0.4 µm.

## Herstellung von E.2

Die Emulsion des Tetrafluorethylenpolymerisats (Teflon 30 N der Fa. DuPont) wird mit der Emulsion des SAN-Pfropfpolymerisats C vermischt und mit 1.8 Gew.-%, bezogen auf Polymerfeststoff, phenolischer Antioxidantien stabilisiert. Bei 85 bis 95°C wird die Mischung mit einer wäßrigen Lösung von $MgSO_4$ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann zusammen mit dem Flammschutzmittel (Komponente E.1) und mit den weiteren Komponenten in den beschriebenen Aggregaten compoundiert werden.

## Herstellung und Prüfung der erfindungsgemäßen Formmassen

Das Mischen der Komponenten erfolgt auf einem 3 1-Innenkneter. Die Formkörper werden auf einer Spritzgießmaschine Typ Arburg 270E bei 260°C hergestellt.

Das Spannungsrißverhalten wird an Stäben der Abmessung 80 x 10 x 4 mm, Massetemperatur 260°C untersucht. Als Testmedium wird eine Mischung aus 60 Vol.-% Toluol und 40 Vol.-% Isopropanol verwendet. Die Probekörper werden mittels einer Kreisbogenschablone vorgedehnt (Vordehnung 1.2 bis 2.4 %) und bei Zimmertemperatur im Testmedium gelagert. Das Spannungsrißverhalten wird über die Rißbildung in Abhängigkeit von der Vordehnung bzw. den Bruch in Abhängigkeit von der Expositionszeit im Testmedium beurteilt.

Die Reißdehnung DR wird im Rahmen der Bestimmung des Zug-E-Moduls nach Methode ISO 527 an F3 Schulterstäben bestimmt.

Die Bestimmung der Wärmeformbeständigkeit nach Vicat B erfolgt gemäß DIN 53460 beziehungsweise ISO 306.

Die Zusammensetzung der geprüften Materialien sowie die erhaltenen Daten sind in der folgenden Tabelle 1 zusammengefaßt.

Tabelle 1

| Beispiele | 1 (Vergleich) | 2 | 3 |
|---|---|---|---|
| | | | |
| Komponenten: [%] | | | |
| A | 68.4 | 67.9 | 67.9 |
| B | 9.3 | 9.2 | 9.2 |
| C | 6.8 | 6.8 | 6.8 |

Tabelle 1 (fortgesetzt)

| Beispiele | 1 (Vergleich) | 2 | 3 |
|---|---|---|---|
| D.1 | - | 0.75 | - |
| D.2 | - | - | 0.75 |
| E.1 | 10,8 | 10,8 | 10,8 |
| E.2 | 4,2 | 4,2 | 4,2 |
| Additive | 0,5 | 0,35 | 0,35 |
| | | | |
| Eigenschaften: | | | |
| Vicat B 120 [°C] | 93 | 95 | 97 |
| ESC-Verhalten Vordehnung 0,8 % / 5 min | BR | kein BR | kein BR |
| ESC-Verhalten Vordehnung 1,8 % / 5 min | BR | BR | BR |
| Reißdehnung [%] | 35.2 | 73.2 | 58.2 |
| BR = Bruch | | | |

Es ist ersichtlich, daß $SiO_2$ die Reißdehnung, den Vicat und das ESC-Verhalten verbessert, wobei die Reißdehnung besonders bei der Verwendung von hydrophilem $SiO_2$ (Komponente D.1) besonders stark verbessert wird.

**Patentansprüche**

1. Thermoplastische Formmassen enthaltend

   A. 40 bis 99 Gew.-Teile eines aromatischen Polycarbonats,

   B. 0 bis 50 Gew.-Teile eines Vinylcopolymerisats,

   C. 0,5 bis 60 Gew.-Teile eines Pfropfpolymerisats mit einem Gelgehalt über 60 Gew.-% und einem mittleren Teilchendurchmesser von 0,1-0,6 µm,

   D. 0,1 bis 30 Gew.-Teile einer Siliciumverbindung ausgewählt aus Siliciumoxiden, Siliciumhydroxiden, wasserhaltigen Silicumoxiden, Silicate und Siliciden mit einem mittleren Teilchendurchmesser von 3 bis 50 nm.

2. Thermoplastische Formmassen nach Anspruch 1 **dadurch gekennzeichnet, dass** der mittlere Teilchendurchmesser der Siliciumverbindung 5 bis 15 nm beträgt.

3. Thermoplastische Formmassen nach Anspruch 1, enthaltend Siliciumoxide, Siliciumhydroxide und wasserhaltige Siliciumoxide.

4. Thermoplastische Formmassen nach Anspruch 3, **dadurch gekennzeichnet, dass** sie hydrophile Siliciumverbindungen enthalten.

5. Thermoplastische Formmassen nach Anspruch 1 **dadurch gekennzeichnet, dass** sie Oxide des Siliciums enthalten.

6. Thermoplastische Formmasse gemäß Anspruch 5, enthaltend Flammschutzmittel, feinstteilige organische Verbindungen oder fluorierte Polyolefine oder Mischungen davon.

7. Formmassen gemäß Anspruch 1, enthaltend 50 bis 95 Gew.-Teile eines aromatischen Polycarbonats A.

8. Formmassen gemäß Anspruch 1, enthaltend Pfropfpolymerisate C hergestellt durch Copolymerisation von

5 bis 95 Gew.-Teilen einer Mischung aus
50 bis 95 Gew.-Teilen Styrol, α-Methylstyrol, mit Halogen oder Alkyl kemsubstituiertem Styrol, $C_1$-$C_8$-Alkylmethacrylat, $C_1$-$C_8$-Alkylacrylat oder Mischungen dieser Verbindungen und
5 bis 50 Gew.-Teilen Acrylnitril, Methacrylnitril, $C_1$-$C_8$-Alkylmethacrylat, $C_1$-$C_8$-Alkylacrylat, Maleinsäureanhydrid, $C_1$-$C_4$-alkyl- bzw. phenyl-N-substituiertem Maleinimid oder Mischungen dieser Verbindungen auf
5 bis 95 Gew.-Teile Kautschuk mit einer Glasübergangstemperatur unter -10°C.

**9.** Formmassen gemäß Anspruch 7, enthaltend als Kautschuk ein Butadien-Polymerisat mit mindestens 50 Gew.-% Butadienresten.

**10.** Formmasse nach Anspruch 1, **dadurch gekennzeichnet, daß** sie als Flammenschutzmittel Phosphorverbindungen enthält.

**11.** Formmasse nach Anspruch 10, **dadurch gekennzeichnet, daß** sie Phosphorverbindungen der Formel (III)

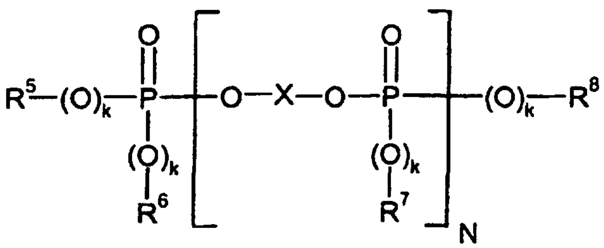

(III),

in welcher

| | |
|---|---|
| $R^5$, $R^6$, $R^7$ und $R^8$, | unabhängig voneinander jeweils gegebenenfalls halogeniertes $C_1$-$C_8$-Alkyl, jeweils gegebenenfalls durch Alkyl, vorzugsweise $C_1$-$C_4$-Alkyl, und/oder Halogen, vorzugsweise Chlor, Brom, substituiertes $C_5$-$C_6$-Cycloalkyl, $C_6$-$C_{30}$-Aryl oder $C_7$-$C_{12}$-Aralkyl, |
| k | unabhängig voneinander, 0 oder 1, |
| N | 0 bis 30, |
| X | einen ein- oder mehrkernigen aromatischen Rest mit 6 bis 30 C-Atomen bedeutet, |

enthält.

**12.** Formmassen nach Ansprüchen 10 bis 11, **dadurch gekennzeichnet, daß** sie 0,01 bis 20 Gew.-%, bezogen auf die Gesamtformmasse wenigstens eines weiteren von Formel (III) verschiedenen Flamrnschutzmittels enthalten.

**13.** Formmassen nach einem der Ansprüche 1 bis 12, wobei sie mindestens ein Additiv aus der Gruppe der Stabilisatoren, Pigmente, Entformungsmittel, Fließhilfsmittel und/oder Antistatika enthalten.

**14.** Verwendung der Formmassen nach einem der vorhergehenden Ansprüche zur Herstellung von Formkörpern.

**15.** Formkörper, hergestellt aus Formmassen nach einem der vorhergehenden Ansprüche.

## Claims

**1.** Thermoplastic moulding compositions comprising

A. 40 to 99 parts by wt. of an aromatic polycarbonate,

B. 0 to 50 parts by wt. of a vinyl copolymer,

C. 0.5 to 60 parts by wt. of a graft polymer with a gel content above 60 wt.% and an average particle diameter of 0.1 - 0.6 μm,

D. 0.1 to 30 parts by wt. of a silicon compound chosen from silicon oxides, silicon hydroxides water-containing silicon oxides, silicates and silicides with an average particle diameter of 3 to 50 nm.

**2.** Thermoplastic moulding compositions according to claim 1, **characterized in that** the average particle diameter of the silicon compound is 5 to 15 nm.

**3.** Thermoplastic moulding compositions according to claim 1, containing silicon oxides, silicon hydroxides and water-containing silicon oxides.

**4.** Thermoplastic moulding compositions according to claim 3, **characterized in that** they comprise hydrophilic silicon compounds.

**5.** Thermoplastic moulding compositions according to claim 1, **characterized in that** they comprise oxides of silicon.

**6.** Thermoplastic moulding compositions according to claim 5, comprising flameproofing agents, very fine-particled organic compounds or fluorinated polyolefins or mixtures thereof.

**7.** Moulding compositions according to claim 1, comprising 50 to 95 parts by wt. of an aromatic polycarbonate A.

**8.** Moulding compositions according to claim 1, comprising graft polymers C prepared by copolymerization of
5 to 95 parts by wt. of a mixture of
50 to 95 parts by wt. styrene, α-methylstyrene, styrene substituted on the nucleus by halogen or alkyl, $C_1$-$C_8$-alkyl methacrylate, $C_1$-$C_8$-alkyl acrylate or mixtures of these compounds and
5 to 50 parts by wt. acrylonitrile, methacrylonitrile, $C_1$-$C_8$-alkyl methacrylate, $C_1$-$C_8$-alkyl acrylate, maleic anhydride, $C_1$-$C_4$-alkyl or phenyl-N-substituted maleimide or mixtures of these compounds on
5 to 95 parts by wt. rubber having a glass transition temperature below -10°C.

**9.** Moulding compositions according to claim 7, containing as the rubber a butadiene polymer with at least 50 wt.% of butadiene radicals.

**10.** Moulding compositions according to claim 1, **characterized in that** they comprise phosphorus compounds as flameproofing agents.

**11.** Moulding compositions according to claim 10, **characterized in that** they comprise phosphorus compounds of the formula (III)

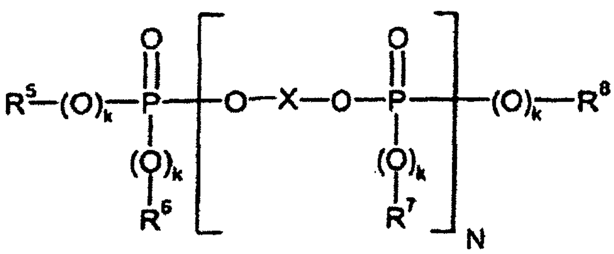

(III),

in which

| | |
|---|---|
| $R^5$, $R^6$, $R^7$ and $R^8$ | independently of one another in each case denote optionally halogenated $C_1$-$C_8$-alkyl, or $C_5$-$C_6$-cycloalkyl, $C_6$-$C_{30}$-aryl or $C_7$-$C_{12}$-aralkyl, in each case optionally substituted by alkyl, preferably $C_1$-$C_4$-alkyl, and/or halogen, preferably chlorine or bromine, |
| k | independently of one another denotes 0 or 1, |
| N | denotes 0 to 30, |

X denotes a mono- or polynuclear aromatic radical having 6 to 30 C atoms.

**12.** Moulding compositions according to claims 10 to 11, **characterized in that** they comprise 0.01 to 20 wt.%, based on the total moulding composition, of at least one other further flameproofing agent which differs from formula (III).

**13.** Moulding compositions according to one of claims 1 to 12, which comprise at least one additive from the group consisting of stabilizers, pigments, mould release agents, flow auxiliaries and/or antistatics.

**14.** Use of the moulding compositions according to one of the preceding claims for the production of shaped articles.

**15.** Shaped articles produced from moulding compositions according to one of the preceding claims.

**Revendications**

**1.** Matières à mouler thermolastiques contenant :

A. 40 à 99 parties en poids d'un polycarbonate aromatique,
B. 0 à 50 parties en poids d'un copolymère de vinyle,
C. 0,5 à 60 parties en poids d'un polymère greffé avec une teneur en gel de plus de 60% en poids et un diamètre moyen des particules de 0,1-0,6 µm,
D. 0,1 à 30 parties en poids d'un composé du silicium, choisi parmi les oxydes de silicium, les hydroxydes de silicium, les oxydes de silicium hydratés, les silicates et silicures avec un diamètre moyen des particules de 3 à 50 nm.

**2.** Matières à mouler thermolastiques suivant la revendication 1, **caractérisées en ce que** le diamètre moyen des particules du composé du silicum se situe dans l'intervalle allant de 5 à 15 nm.

**3.** Matières à mouler thermolastiques suivant la revendication 1, contenant des oxydes de silicium, des hydroxydes de silicium et des oxydes de silicium hydratés.

**4.** Matières à mouler thermolastiques suivant la revendication 3, **caractérisées en ce qu'**elles contiennent des composés hydrophiles du silicium.

**5.** Matières à mouler thermolastiques suivant la revendication 1, **caractérisées en ce qu'**elles contiennent des oxydes de silicium.

**6.** Matières à mouler thermolastiques suivant la revendication 5, contenant des agents de protection contre les flammes, des composés organiques finement divisés ou des polyoléfines fluorées, ou des mélanges de ceux-ci.

**7.** Matières à mouler suivant la revendication 1, contenant 50 à 95 parties en poids d'un polycarbonate aromatique A.

**8.** Matières à mouler suivant la revendication 1, contenant un polymère greffé C, préparé par copolymérisation de :

5 à 95 parties en poids d'un mélange de
50 à 95 parties en poids de styrène, d'α-méthylstyrène, de styrène substitué par un atome d'halogène ou un radical alcoyle, de méthacrylate d'alcoyle en $C_1$-$C_8$, d'acrylate d'alcoyle en $C_1$-$C_8$, ou de mélanges de ces composés, et
5 à 50 parties en poids d'acrylonitrile, de méthacrylonitrile, de méthacrylate d'alcoyle en $C_1$-$C_8$, d'acrylate d'alcoyle en $C_1$-$C_8$, d'anhydride maléique, de maléimide (alcoyl en $C_1$-$C_4$)- ou phényl-N-substitué, ou de mélanges de ces composés, sur
5 à 95 parties en poids de caoutchouc avec une température de transition vitreuse inférieure à -10°C.

**9.** Matières à mouler suivant la revendication 7, contenant comme caoutchouc, un polymère de butadiène avec au moins 50% en poids de restes butadiène.

**10.** Matière à mouler suivant la revendication 1, **caractérisée en ce qu'**elle contient comme agent de protection contre les flammes, des composés du phosphore.

**11.** Matière à mouler suivant la revendication 10, **caractérisée en ce qu'**elle contient des composés du phosphore de la formule (III) :

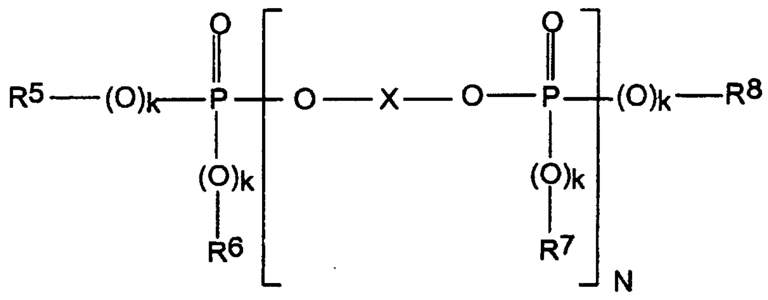

(III)

dans laquelle :

$R^5$, $R^6$, $R^7$ et $R^8$ représentent indépendamment l'un de l'autre, un radical alcoyle en $C_1$-$C_8$ chaque fois le cas échéant halogéné, un radical cycloalcoyle en $C_5$-$C_6$, aryle en $C_6$-$C_{30}$ ou aralcoyle en $C_7$-$C_{12}$, chaque fois le cas échéant substitué par un radical alcoyle, de préférence par un radical alcoyle en $C_1$-$C_4$, et/ou un atome d'halogène, de préférence l'atome de chlore, de brome,
k représente indépendamment, 0 ou 1,
N représente 0 à 30,
X représente un reste aromatique mono- ou polycycliques avec 6 à 30 atomes.

**12.** Matières à mouler suivant les revendications 10 à 11, **caractérisées en ce qu'**elles contiennent de 0,01 à 20% en poids, sur base de toute la matière à mouler, d'au moins un autre agent de protection contre les flammes, différent de la formule (III).

**13.** Matières à mouler suivant l'une des revendications 1 à 12, **caractérisées en ce qu'**elles contiennent au moins un additif parmi le groupe des stabilisants, des pigments, des agents de démoulage, des auxillaires d'écoulement et/ou des antistatiques.

**14.** Utilisation des matières à mouler suivant l'une des revendications précédentes pour la préparation de corps moulés.

**15.** Corps moulés, préparés à partir des matières à mouler suivant l'une des revendications précédentes.